(19) Europäisches Patentamt
European Patent Office
Office européen des brevets

(11) Veröffentlichungsnummer : **0 101 927**
**B1**

(12) # EUROPÄISCHE PATENTSCHRIFT

(45) Veröffentlichungstag der Patentschrift : **05.03.86**

(51) Int. Cl.⁴ : **C 07 F 15/04**, C 08 F 4/80, B 01 J 31/28

(21) Anmeldenummer : **83107308.5**

(22) Anmeldetag : **26.07.83**

(54) **Organische Nickel-Verbindungen deren Herstellung und Verwendung als Katalysatoren bei der Polymerisation von Olefinen.**

(30) Priorität : **03.08.82 DE 3228865**
**17.05.83 DE 3317825**
**11.06.83 DE 3321179**

(43) Veröffentlichungstag der Anmeldung : **07.03.84 Patentblatt 84/10**

(45) Bekanntmachung des Hinweises auf die Patenterteilung : **05.03.86 Patentblatt 86/10**

(84) Benannte Vertragsstaaten :
**DE FR GB IT NL**

(56) Entgegenhaltungen :
**EP-A- 0 046 331**
**DE-A- 2 062 336**
**DE-A- 2 923 206**
**US-A- 2 998 416**
**Chemical Abstracts, Band 96, Nr. 14, 5. April 1982, N.A. MOLDAVSKAYA et al. "Synthesis and study of complexes of nickel (II) with unsaturated phosphine oxides", Seite 737, Spalte 2, abstract no. 114880z**
**ANGEWANDTE CHEMIE, Band 90, Nr. 6, 1978, W. KEIM et al. "Neuartige Koordinierungsweise von (Benzoylmethylen)-triphenylphosphoran in einem Nickel-Oligomerisierungskatalysator", Seite 493**

(73) Patentinhaber : **BAYER AG**
**Konzernverwaltung RP Patentabteilung**
**D-5090 Leverkusen 1 Bayerwerk (DE)**

(72) Erfinder : **Ostoja Starzewski Karl-Heinz Aleksander, Dr.**
**Vogelweidstrasse 6**
**D-5000 Frankfurt a. Main 70 (DE)**
Erfinder : **Witte, Josef, Dr.**
**Haferkamp 10**
**D-5000 Köln 80 (DE)**
Erfinder : **Bartl, Herbert, Dr.**
**Eichendorffweg 10**
**D-5068 Odenthal (DE)**

EP 0 101 927 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Nickel-Verbindungen, die durch Reaktion einer Nickel-(O)-verbindung oder einer Nickel-verbindung, die in situ in eine Nickel-(O)-verbindung überführt werden kann, mit Verbindungen der Formeln (I) und (II)

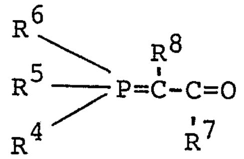

(I)

und

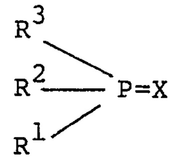

(II)

herstellbar sind, sowie deren Verwendung als Katalysatoren bei der Polymerisation von Olefinen.

Die Verwendung von Übergangsmetall-Verbindungen als Katalysatoren zur Olefinpolymerisation ist z. B. aus US-PS 2 998 416 bekannt, beispielsweise die Verwendung eines Umsetzungsproduktes aus z. B. Titantetrachlorid oder Nickelchlorid mit einer Verbindung der Formel (II) mit $X = CR_2$.

Nachteile dieses Katalysators sind schwere Handhabbarkeit, mangelnde Lagerstabilität, schwere Dosierbarkeit, schlechte Ausbeuten und geringe Aktivität.

Weiterhin beschreibt die DE-OS 2 062 336 als Katalysator für die Olefinpolymerisation ein Umsetzungsprodukt einer Nickel-(O)-Verbindung mit einer Verbindung der Formel (I) und/oder einer Verbindung der Formel (IV)

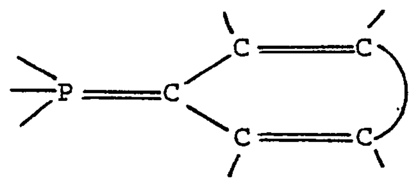

(IV)

Nachteile dieses Katalysators sind Instabilität der Lösungen und unbefriedigende Ausbeuten.

Aus Angew. Chem. *90,* 493 (1978) ist der Katalysator der Formel (V),

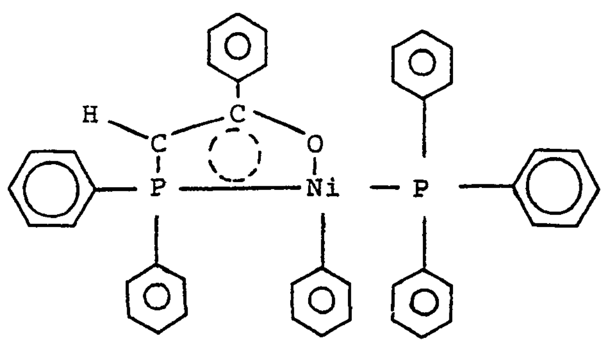

(V)

bekannt, der jedoch eine unbefriedigende Aktivität aufweist (max. 6 000 Mol Ethylen/mol Katalysator) und nur Oligomere liefert.

Ferner offenbart die EP-OS 46 331 einen Nickel-Katalysator zur Olefinpolymerisation, der sich von dem erfindungsgemäßen durch das Fehlen der —X-Gruppe unterscheidet.

Nachteile dieses Katalysators sind die Temperaturempfindlichkeit ab ca. 50 °C und die Druckempfindlichkeit ab ca. 40 bar.

Der Nickelkatalysator der DE-OS 2 923 206 weist mangelnde Aktivität auf, verlangt relativ hohe Nikonzentrationen und ist in der Lösungsmittelwahl sehr beschränkt.

Es besteht daher ein Bedürfnis, die mit den bekannten Nickel-Katalysatoren verbundenen Nachteile zu beheben.

Es wurde nun gefunden, daß man mit den erfindungsgemäßen Verbindungen diese Nachteile überwinden kann.

Die erfindungsgemäßen Verbindungen sind zum Teil gut charakterisierte Reinstoffe, in hoher Ausbeute erhältlich, gut transportierbar, gut dosierbar, lagerstabil, thermisch stabil, relativ luftstabil, in extremer Verdünnung und in einer Vielzahl von Lösungsmitteln katalytisch wirksam und in weitem Temperaturbereich und in weitem Druckbereich aktiv.

Gegenstand der Erfindung sind demgemäß Nickel-Verbindungen, herstellbar durch Umsetzung einer

Nickel-(O)-Verbindung oder einer Verbindung, die in situ in eine Nickel-(O)-Verbindung überführt werden kann, mit Verbindungen der Formeln (I) und (II)

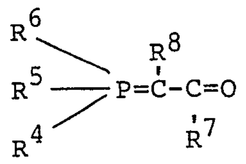

und

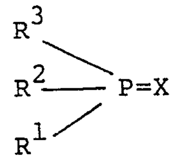

(I) (II)

worin

$R^1$, $R^2$ und $R^3$ unabhängig voneinander gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino, Phenoxy oder $C_1$-$C_4$-Alkoxy

X O, $NR^9$ oder

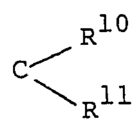

$R^4$, $R^5$, $R^6$, $R^7$ und $R^8$ unabhängig voneinander, gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem.

$R^7$ Wasserstoff,

$R^8$ Wasserstoff oder Sulfonat und

$R^9$, $R^{10}$ und $R^{11}$ unabhängig voneinander Wasserstoff, Trimethylsilyl, Nitrophenyl, Halogen, Cyano oder $R^1$ bedeuten.

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und $C_1$-$C_4$-Alkoxy.

$R^4$ ist vorzugsweise $C_6$-$C_{12}$-Aryl.

$R^5$, $R^6$, $R^7$ und $R^8$ sind vorzugsweise Cyclohexyl, Phenyl, Tolyl, Benzyl, Vinyl und $C_1$-$C_4$-Alkyl.

$R^7$ ist darüberhinaus bevorzugt Wasserstoff oder $C_1$-$C_4$-Alkoxy, $R^8$ darüber hinaus bevorzugt Wasserstoff oder Sulfonat.

$R^9$, $R^{10}$ und $R^{11}$ sind vorzugsweise Wasserstoff, $C_1$-$C_6$-Alkyl, Phenyl, Chlorphenyl, Nitrophenyl, $C_1$-$C_6$-Alkylphenyl, Trimethylsilyl, Chlor, Cyano, $C_2$-$C_6$-Alkenyl und Phenyl-$C_2$-$C_6$-alkenyl.

Die erfindungsgemäßen Nickel-Verbindungen stehen nach den vorliegenden Erkenntnissen mit der Formel (III)

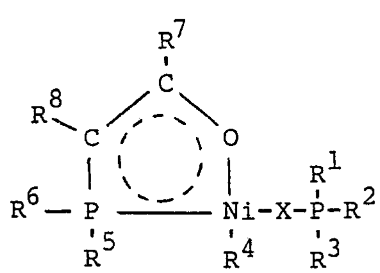

(III)

worin X und $R^1$ bis $R^8$ die vorstehend genannten bedeutungen besitzen, in Einklang.

Bevorzugt werden pro Mol Nickel-(O)-verbindung 1-4 Mole der Verbindung der Formel (I) und 1-4 Mole der Verbindung der Formel (II) eingesetzt, besonders bevorzugt pro Mol der Nickel-(O)-verbindung 1 Mol der Verbindung der Formel (I) und 1 Mol der Verbindung der Formel (II).

Die Umsetzungstemperatur beträgt 0-100 °C, insbesondere 20-70 °C.

Die Reaktion wird unter Ausschluß von Sauerstoff, vorzugsweise in einem Lösungsmittel das gegenüber den reaktanden inert sein muß, wie Benzol, Toluol, Cyclohexan und n-Hexan, durchgeführt.

Nach Beendigung der Reaktion wird der Katalysator als Feststoff gewöhnlich durch Filtration isoliert, wobei man nach Bedarf die Lösung zuvor einengt und/oder abkühlt.

Er kann auch ohne Isolierung direkt zur Polymerisation von Olefinen eingesetzt werden.

Es ist auch möglich, den Katalysator in Anwesenheit von Olefinen herzustellen.

Als Nickel-(O)-Verbindungen seien beispielhaft $Ni(cyclooctadien)_2$ und $Ni(allyl)_2$ genannt.

Als Nickelverbindungen, die in situ in Nickel-(O)-Verbindungen überführt werden können seien

beispielsweise aufgeführt: Ni-acetylacetonat, Ni-octanoat und Ni-stearat, die mit Hilfe von üblichen Reduktionsmitteln wie Boranat, Alanat, Aluminiumalkylen oder Lithiumorganylen reduziert werden können.

Ein weiterer gegenstand der Erfindung ist die Verwendung der erfindungsgemäßen Nickel-Verbindungen als Katalysatoren bei der Polymerisation von Olefinen, insbesondere von Ethen. Dabei können die erfindungsgemäßen Verbindungen, wenn sie eine Sulphonatgruppe aufweisen als Alkali-, Ammonium- oder Phosphoniumsalze, beispielsweise Tetraorganylammonium- oder Tetraorganylphosphoniumsalze, wie Tetrabutylammonium- oder Triphenyldodecylphosphoniumsalze, eingesetzt werden.

Die Verbindungen der Formeln (I) und (II) sind bekannt oder werden nach üblichen Methoden hergestellt.

Die Menge der verwendeten Nickel-Verbindung ist nicht kritisch. Typische Katalysatorkonzentrationen liegen zwischen 10 und $10^{-6}$, vorzugsweise zwischen $10^{-2}$ und $10^{-4}$ Mol pro Liter. Die Menge an Katalysator, bezogen auf Ethen, liegt im Bereich von 0,005 bis 10 Gewichtsprozent, vorzugsweise 0,01 bis 0,1 Gewichtsprozent.

Für die Polymerisation von Olefinen mit den erfindungsgemäßen Katalysatoren eignen sich folgende Verfahrensweisen:

a) Vorlegen des festen oder gelösten Katalysators (oder seiner Komponenten), Zugabe des Olefins, dann Aufheizen

b) Vorlegen des Olefins, Injektion des Katalysator-Lösung oder -Suspension (oder seiner Komponenten)

c) kontinuierliches Dosieren der Katalysator-Lösung (oder die seiner Komponenten) bei vorgegebenen gewünschten Polymerisations-Bedingungen (Druck, Temperatur) zum Olefin.

Verfahrenstechnich zu bevorzugen ist die kontinuierliche Dosierung des Katalysators. Die Polymerisation kann in einem Lösungs- bzw. Verdünnungsmittel bzw. Suspensionsmittel durchgeführt werden, wobei beispielsweise Aliphaten wie n-Hexan, Cyclohexan, Aromaten wie Benzol, Toluol, Xylol, Halogenkohlenwasserstoffe wie Methylenchlorid, Ketone wie Aceton, Methylethylketon, Ester wie Essigsäureethylester, Säureamide wie Dimethylformamid und Ether wie Tetrahydrofuran in Frage kommen.

Die Polymerisation kann sowohl kontinuierlich als auch diskontinuierlich durchgeführt werden.

Die Polymerisationstemperatur beträgt bevorzugt 20 bis 200 °C, inbesondere von 60 bis 150 °C.

Der anzuwendende Olefindruck beträgt mindestens 1 bar, bevorzugt sind 5 bis 1 000 bar.

Im Fall der Ethenpolymerisation werden je nach Liganden Produkte mit unterschiedlichen Molekulargewichten erhalten.

### Beispiel 1

2 mmol Bis-cyclooctadien-nickel(O) in 250 ml trockenem stickstoffgesättigtem Toluol werden unter Stickstoff mit 2 mmol Benzoyl-methylen-triphenylphosphoran und 2 mmol N-Trimethylsilyl-triphenylphosphinimin gemischt. Unter intensivem Rühren erwärmt man ca. 2 Stunden auf 40 bis 60 °C. Die dunkelgelb-braune Lösung wird filtriert. Diese Lösung wird bei der nachfolgenden Ethenpolymerisation eingesetzt.

Beim Einengen der Lösung, Zugabe von Hexan und anschließendem Abkühlen auf 0 bis − 20 °C bildet sich ein gelbes Kristall-Pulver.

### Beispiel 2

Allgemeine Vorschrift zur Ethen-Polymerisation

Der erfindungsgemäße Katalysator wird beispielsweise als Lösung oder Suspension in Toluol in den vorbereiteten Autoklaven injiziert (single pulse injection), oder er wird langsam parallel zum Ethen-Verbrauch zudosiert (multi pulse injection), wobei isolierte Substanzen oder Reaktionslösungen der Katalysator-Komponenten (« in situ »-Katalysatoren) verwendet werden. Nach 1 bis 2 Stunden Polymerisationszeit läßt man abkühlen, entspannt den Autoklaven, und isoliert das feste Polyethylen (PE) durch Filtration. Das Filtrat wird gaschromatographisch untersucht. Nach Entfernen des Lösungsmittels im Rotationsverdampfer läßt sich die Menge der Oligomeren auswiegen. Die niedrigsiedenden Anteile sind daher in den angegebenen Ausbeuten (Summe aus Polymeren und Oligomeren) bzw. den berechneten Aktivitäten (mol umgesetztes Ethen pro mol Ni-Katalysator) nicht berücksichtigt. Die Katalysatoren werden gemäß Beispiel 1 jeweils aus 2 mmol Bis-cyclooctadiennickel und den angegebenen Mengen der Komponenten (I) und (II), definiert durch ihre Substituenten X und $R^1$ bis $R^9$, hergestellt.

a) Katalysator: 2 mmol I ($R^4 = R^5 = R^6$ = Phenyl, $R^8$ = H, $R^7$ = Methyl), 2 mmol II ($R^1 = R^2 = R^3$ = Phenyl, X = $NR^9$, $R^9$ = Trimethylsilyl)
in 250 ml Toluol (multi pulse injection)
Lösungsmittel: 1 Liter Cyclohexan
Polymerisationsdruck: 100 bar Ethen
Polymerisationstemperatur: 100 °C

Gesamtausbeute : 1 281 g (0 % Oligomere)
PE-Schmelzpunkt : ca. 112 °C
Grenzviskosität des PE in Tetralin bei 140 °C 0.10 dl/g
Katalysator-Aktivität : 22 875 mol umgesetztes Ethen pro mol Nickel.

b) Katalysator : 2 mmol I ($R^4 = R^5 = R^6$ = Phenyl, $R^8$ = H, $R^7$ = Methyl), 2 mmol II ($R^1 = R^2 = R^3$ = Phenyl, X = $NR^9$, $R^9$ = Trimethylsilyl)
in 250 ml Toluol (multi pulse injection)
Lösungsmittel : 12 Liter Cyclohexan
Polymerisationsdruck : 10 bar Ethen
Polymerisationstemperatur : 100 °C
Gesamtausbeute : 1 638 g (11 % Oligomere)
Pe-Schmelzpunkt : ca. 116 °C
Grenzviskosität des PE in Tetralin bei 140 °C 0.09 dl/g Katalysator-Aktivität : 29 250 mol umgesetztes Ethen pro mol Nickel

c) Katalysator : 2 mmol I ($R^4 = R^5 = R^6$ = Phenyl, $R^8$ = H, $R^7$ = Methyl), 2 mmol II ($R^1 = R^2 = R^3$ = Methyl, X = 0)
in 250 ml Toluol (multi pulse injektion)
Lösungsmittel : 12 Liter Cyclohexan
Polymerisationsdruck : 10 bar Ethen
Polymerisationstemperatur : 100 °C
Gesamtausbeute : 1 976 g (7 % Oligomere)
PE-Schmelzpunkt : 114 °C
Grenzviskosität des PE in Tetralin bei 140 °C 0.13 dl/g Katalysator-Aktivität : 35 286 mol Ethen pro mol Nickel.

d) Katalysator : 2 mmol I ($R^4 = R^5 = R^6$ = Phenyl, $R^8$ = H, $R^7$ = Methyl), 2 mmol II ($R^1 = R^2 = R^3$ = Phenyl, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 1 268 g (11 % Oligomere)
PE-Schmelzpunkt : ca. 115 °C
Grenzviskosität des PE in Tetralin bei 140 °C 0.12 dl/g
Katalysator-Aktivität : 22 643 mol umgesetztes Ethen pro mol Nickel.

e) Katalysator 2 mmol I ($R^4 = R^5 = R^6$ = Phenyl, $R^8$ = H, $R^7$ = Methyl), 2 mmol II ($R^1 = R^2 = R^3$ = Dimethylamino, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 1 255 g (14 % Oligomere)
PE-Schmelzpunkt : ca. 115 °C
Grenzviskosität des PE in Tetralin bei 140 °C 0.13 dl/g
Katalysator-Aktivität : 22 411 mol umgesetztes Ethen pro mol Nickel.

f) Katalysator : 2 mmol I ($R^4 = R^5 = R^6$ = Phenyl, $R^8$ = H, $R^7$ = Methyl), 2 mmol II ($R^1 = R^2 = R^3$ = Phenoxy, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 1 290 g (16 % Oligomere)
PE-Schmelzpunkt : ca. 118 °C
Grenzviskosität des PE in Tetralin bei 140 °C 0.13 dl/g
Katalysator-Aktivität : 23 036 mol umgesetztes Ethen pro mol Nickel.

g) Katalysator : 2 mmol I ($R^4 = R^5 = R^6 = R^7$ = Phenyl, $R^8$ = H), 2 mmol II ($R^1 = R^2 = R^3$ = Phenyl, X = $NR^9$, $R^9$ = tert.-Butyl)
in 250 ml Toluol (multi pulse injection)
Lösungsmittel : 12 Liter Cyclohexan
Polymerisationsdruck : 10 bar Ethen

Polymerisationstemperatur : ca. 100 °C
Gesamtausbeute : 1 368 g (12 % Oligomere)
PE-Schmelzpunkt : 118 °C
Grenzviskosität des PE in Tetralin bei 140 °C 0.11 dl/g
Katalysator-Aktivität : 24 429 mol umgesetztes Ethen pro mol Nickel.

h) Katalysator : 2 mmol I ($R^4 = R^5 = R^6 = R^7$ = Phenyl, $R^8$ = H), 2 mmol II ($R^1 = R^2 = R^3$ = Phenyl, X = $NR^9$, $R^9$ = Trimethylsilyl),
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 2 943 g (2 % Oligomere)
PE-Schmelzpunkt : ca. 116 °C
Grenzviskosität des PE in Tetralin bei 140 °C 0.18 dl/g
Katalysator-Aktivität : 52 554 mol umgesetztes Ethen pro mol Nickel.

i) Katalysator : 2 mmol I ($R^4 = R^5 = R^6 = R^7$ = Phenyl, $R^8$ = H), 2 mmol II ($R^1 = R^2 = R^3$ = Methyl, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 2 779 g (6 % Oligomere)
PE-Schmelzpunkt : 118 °C
Grenzviskosität des PE in Tetralin bei 140 °C 0.19 dl/g
Katalysator-Aktivität : 49 625 mol umgesetztes Ethen pro mol Nickel.

j) Katalysator : 2 mmol I ($R^4 = R^5 = R^6 = R^7$ = Phenyl, $R^8$ = H), 2 mmol II ($R^1 = R^2 = R^3$ = Phenyl, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 1 849 g (7 % Oligomere)
PE-Schmelzpunkt : 118 °C
Grenzviskosität des PE in Tetralin bei 140 °C 0.15 dl/g
Katalysator-Aktivität : 33 018 mol umgesetztes Ethen pro mol Nickel.

k) Katalysator : 2 mmol I ($R^4 = R^5 = R^6 = R^7$ = Phenyl, $R^8$ = H), 2 mmol II ($R^1 = R^2 = R^3$ = Dimethylamino, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 1 842 g (9 % Oligomere)
PE-Schmelzpunkt : ca. 117 °C
Grenzviskosität des PE in Tetralin bei 140 °C 0.12 dl/g
Katalysator-Aktivität : 32 893 mol umgesetztes Ethen pro mol Nickel.

l) Katalysator : 2 mmol I ($R^4 = R^5 = R^6 = R^7$ = Phenyl, $R^8$ = H), 2 mmol II ($R^1 = R^2 = R^3$ = Phenoxy, X = 0)
in 250 ml Toluol (multi pulse injection)
Lösungsmittel : 12 Liter Cyclohexan
Polymerisationsdruck : 10 bar Ethen
Polymerisationstemperatur : ca. 100 °C
Gesamtausbeute : 2 353 g (8 % Oligomere)
PE-Schmelzpunkt : ca. 115 °C
Grenzviskosität des PE in Tetralin bei 120 °C 0.15 dl/g
Katalysator-Aktivität : 42 018 mol umgesetztes Ethen pro mol Nickel.

m) Katalysator : 2 mmol I ($R^4 = R^5 = R^6$ = Phenyl, $R^8$ = H, $R^7$ = Methyl), 2 mmol II ($R^1 = R^2 = R^3$ = Phenyl, X = $NR^9$, $R^9$ = tert.-Butyl)
in 250 ml Toluol (multi pulse injection)
Lösungsmittel : 1 Liter Cyclohexan

Polymerisationsdruck : 100 bar Ethen
Polymerisationstemperatur : ca. 100 °C
Gesamtausbeute : 1 262 g (0 % Oligomere)
PE-Schmelzpunkt : 111 °C
Grenzviskosität des PE in Tetralin bei 140 °C 0.10 dl/g
Katalysator-Aktivität : 22 536 mol umgesetztes Ethen pro mol Nickel.

n) Katalysator : 2 mmol I ($R^4 = R^5 = R^6 = R^7$ = Phenyl, $R^8 = SO_3Na$), 2 mmol II ($R^1 = R^2 = R^3$ = Phenyl, X = 0)
in 230 ml Toluol/20 ml Dimethylformamid (multi pulse injection)
Lösungsmittel : 12 Liter Cyclohexan
Polymerisationsdruck : 10 bar Ethen
Polymerisationstemperatur : 100 °C
Gesamtausbeute : 680 g (7 % Oligomere)
PE-Schmelzpunkt : 127 °C
Grenzviskosität des PE in Tetralin bei 140 °C 0.53 dl/g
Katalysator-Aktivität : 12 143 mol umgesetztes Ethen pro mol Nickel.

## Beispiel 3

50 mmol Bis(cyclooctadien) nickel(O) in ca. 200 ml trockenem, Stickstoff-gesättigtem Toluol werden unter Inertgas (Stickstoff oder Argon) mit äquivalenten Mengen von Benzoylmethylen-triphenylphosphoran und Methylen-trimethylphosphoran gemischt. Unter intensivem Rühren erwärmt man ca. 2 Stunden auf 40° bis 60 °C. Nach anschließender Schlenk-Filtration wird die dunkelgelb-braune Lösung im Vakuum zur Hälfte eingeengt. Beim Abkühlen auf 0° bis – 20 °C bildet sich eine erste Fraktion gelber Kristalle, die durch Schlenk-Filtration isoliert, mit Hexan gewaschen, und im Vakuum getrocknet wird. Mit dem Filtrat wird entsprechend verfahren, wobei die ersten 3 kristallinen Fraktionen bereits ca. 80 % Ausbeute der reinen erfindungsgmäßen Nickelverbindung 3.1. liefern. Verunreinigte Fraktionen lassen sich durch Umkristallisieren z. B. aus Toluol/Hexan reinigen.
Fp. : 117°-120 °C unter Zersetzung
$C_{30}H_{32}OP_2Ni$, Molmasse : ber. 529.2 gef. 528 (Massenspektroskopisch für $^{58}$Ni-Isotop)

| | | | | |
|---|---|---|---|---|
| ber. : | %C 68.08 | %H 6.09 | %P 11.7 | %Ni 11.09 |
| gef. : | %C 67.8 | %H 6.1 | %P 11.7 | %Ni 11.0 |

ESCA-Bindungsenergien relativ zu C(1s) = 284.6 eV : Ni($2p_{3/2}$) = 854.8 eV, O(1s) = 530.9 eV, P(2p) = 132.0 eV.

Multinucleare NMR-Daten :

$^{31}P$ $^{1}H$ NMR in $C_6D_6/H_3PO_4$ ext
+ 17.4 ppm (d), + 20.8 ppm (d), $^3J(^{31}P^{31}P)$ = 8 Hz.
$^{31}P$ {$^1H$} NMR in $CD_2Cl_2$/TMS int
+ 7.3 ppm (dd, P$\underline{C}H_2$), $^1J(^{31}P^{13}C)$ = 65 Hz, $^2J(^{31}P^{13}C)$ = 30 Hz ;
+ 15.4 ppm (d, $H_3\underline{C}P$), $^1J(^{31}P^{13}C)$ = 55 Hz ;
+ 78.9 ppm (d, P$\underline{C}$H), $^1J(^{31}P^{13}C)$ = 52 Hz ;
Phenyl-Kohlenstoff-Resonanzen 120 ppm bis 156 ppm :
+ 120.3 ppm (s) ; + 125.2 ppm (s) ; + 127.2 ppm (s) ;
+ 128.0 ppm (d, 3 Hz) ; + 128.1 ppm (s) ; + 128.6 ppm (s) ;
+ 128.9 ppm (s) ; + 132.8 ppm (d, 10 Hz) ;
+ 135.9 ppm (d, 42 Hz) ; + 138.8 ppm (d, 4 Hz) ; + 139.9 ppm (d, 13 Hz) ; + 156.1 ppm (d, 31 Hz) ;
+ 182.1 ppm (d, PCH$\underline{C}$O), $^2J(^{31}P^{13}C)$ = 25 Hz.

$^1H$ NMR in $CD_2Cl_2$/TMS int
+ 0.65 ppm (dd, 2 H), $^2J(^{31}P^1H)$ = 13 Hz, $^3J(^{31}P^1H)$ = 5 Hz ;
+ 1.56 ppm (d, 9 H), $^2J(^{31}P^1H)$ = 13 Hz ;
+ 4.93 ppm (s, 1 H)
+ 6.5 bis + 7.8 ppm (m, 20 H).

Weitere Katalysatoren sind in der folgenden Tabelle durch die charakteristischen $^{31}P$ NMR-Verschiebungen und massenspektroskopisch identifizierten Molionen für das $^{58}$Ni-Isotop charakterisiert. Dabei wird als erste Komponente in 3.2 bis 3.7 Acetylmethylen-triphenylphosphoran und in 3.8 bis 3.10 Benzoylmethylen-triphenylphosphoran sowie als zweite Komponente die angegebenen Verbindungen eingesetzt.

| | | δ $^{31}P$ (ppm) | J $^{31}P$ (ppm) | Molion für $^{58}Ni$ |
|---|---|---|---|---|
| 3.2 | Methylentriphenyl-phosphoran | +18.5 | +34.1 | |
| 3.3 | Methylentriisopropyl-phosphoran | +17.7 | +54.3 | 550 |
| 3.4 | Methylentriethylphos-phoran | +17.8 | +41.1 | |
| 3.5 | Methylentrimethyl-phosphoran | +17.8 | +21.7 | 466 |
| 3.6 | Trimethylsilylmethylen-triethylphosphoran | +18.2 | +37.5 | 580 |
| 3.7 | Phenylmethylentriiso-propylphosphoran | +22.6 | +43.0 | |
| 3.8 | Methylentrimethylphos-phoran | +17.4 | +20.8 | 528 |
| 3.9 | Trimethylsilylmethylen-triethylphosphoran | +17.5 | +38.1 | 642 |
| 3.10 | Phenylmethylentriiso-propylphosphoran | +21.5 | +43.0 | |

Beispiel 4

Die Ethenpolymerisation wird entsprechend Beispiel 2 durchgeführt, wobei als Katalysatoren Reinstoffe (gekennzeichnet durch den Formelhinweis III) oder « in situ » — Katalysatoren (gekennzeichnet durch die Formelhinweise I und II) eingesetzt werden.

a) Katalysator : 2 mmol III ($R^1 = R^2 = R^3 = R^4 = R^5 = R^6$ = Phenyl, $R^7$ = Methyl, $R^8$ = H, X = $CH_2$) in 250 ml Toluol (multi pulse injection)
Lösungsmittel : 4 Liter Cyclohexan
Polymerisationsdruck : 10 bar Ethen
Polymerisationstemperatur : 80 °C
Gesamtausbeute : 782 g (19 % Oligomere)
PE-Schmelzpunkt : ca. 109 °C
Grenzviskosität des PE in Tetralin bei 120 °C 0.06 dl/g
Katalysator-Aktivität : 13 964 mol umgesetztes Ethen pro mol Nickel.

b) Katalysator : 2 mmol I ($R^4 = R^5 = R^6$ = Phenyl, $R^7$ = Methyl, $R^8$ = H), 4 mmol II ($R^1 = R^2 = R^3$ = Isopropyl, X = $CH_2$) in 50 ml Toluol (single pulse injection)
Lösungsmittel : 1 Liter Toluol
Polymerisationsdruck : 90 bar
Polymerisationstemperatur : 110 °C
Gesamtausbeute : 586 g (18 % Oligomere)
PE-Schmelzpunkt : ca. 111 °C
Grenzviskosität des PE in Tetralin bei 120 °C 0.07 dl/g
Katalysator-Aktivität : 10 464 mol umgesetztes Ethen pro mol Nickel.

c) Katalysator : 1 mmol III ($R^1 = R^2 = R^3$ = Isopropyl, $R^4 = R^5 = R^6$ = Phenyl, $R^7$ = Methyl, $R^8$ = H, X = $CH_2$) in 250 ml Toluol (multi pulse injection)
Lösungsmittel : 1 Liter Methylenchlorid
Polymerisationsdruck : 10 bar Ethen
Polymerisationstemperatur : 95 °C
Gesamtausbeute : 536 g (11 % Oligomere)
PE-Schmelzpunkt : ca. 105 °C
Grenzviskosität des PE in Tetralin bei 120 °C 0.07 dl/g
Katalysator-Aktivität : 19 143 mol umgesetztes Ethen pro mol Nickel.

d) Katalysator : 2 mmol III ($R^1 = R^2 = R^3$ = Ethyl, $R^4 = R^5 = R^6$ = Phenyl, $R^7$ = Methyl, $R^8$ = H, X = $CH_2$) in 250 ml Toluol (multi pulse injection)
Lösungsmittel : 1 Liter Cyclohexan
Polymerisationsdruck : 100 bar Ethen
Polymerisationstemperatur : 115 °C
Gesamtausbeute : 993 g (2 % Oligomere)
PE-Schmelzpunkt : ca. 110 °C
Grenzviskosität des PE in Tetralin bei 120 °C 0.06 dl/g
Katalysator-Aktivität : 17 732 mol umgesetztes Ethen pro mol Nickel.

e) Katalysator : 2 mmol III ($R^1 = R^2 = R^3$ = Isopropyl, $R^4 = R^5 = R^6$ = Phenyl, $R^7$ = Methyl, $R^8$ = H, $R^{10}$ = Phenyl, X = $CHR^{10}$) in 250 ml Toluol (multi pulse injection)
Lösungsmittel : 4 Liter Cyclohexan
Polymerisationsdruck : 10 bar Ethen
Polymerisationstemperatur : 80 °C
Gesamtausbeute : 1 775 g (4 % Oligomere)
PE-Schmelzpunkt : ca. 116 °C
Grenzviskosität des PE in Tetralin bei 120 °C 0.09 dl/g
Katalysator-Aktivität : 31 696 mol umgesetztes Ethen pro mol Nickel.

f) Katalysator : 2 mmol III ($R^1 = R^2 = R^3$ = Isopropyl, $R^4 = R^5 = R^6 = R^{10}$ = Phenyl, $R^7$ = Methyl, $R^8$ = H, X = $CHR^{10}$) in 250 ml Toluol (multi pulse injection)
Lösungsmittel : 4 Liter Toluol
Polymerisationsdruck : 10 bar Ethen
Polymerisationstemperatur : 80 °C
Gesamtausbeute : 1 366 g (5 % Oligomere)
PE-Schmelzpunkt : ca. 116 °C
Grenzviskosität des PE in Tetralin bei 120 °C 0.11 dl/g
Katalysator-Aktivität : 24 393 mol umgesetztes Ethen pro mol Nickel.

g) Katalysator : 2 mmol III ($R^1 = R^2 = R^3$ = Methyl, $R^4 = R^5 = R^6 = R^7$ = Phenyl, $R^8$ = H, X = $CH_2$) in 250 ml Toluol (multi pulse injection)
Lösungsmittel : 32 Liter Cyclohexan
Polymerisationsdruck : 10 bar Ethen
Polymerisationstemperatur : 90 °C
Gesamtausbeute : 1 174 g (11 % Oligomere)
PE-Schmelzpunkt : ca. 118 °C
Grenzviskosität des PE in Tetralin bei 120 °C 0.11 dl/g
Katalysator-Aktivität : 20 964 mol umgesetztes Ethen pro mol Nickel.

h) Katalysator : 2 mmol III ($R^1 = R^2 = R^3$ = Ethyl, $R^4 = R^5 = R^6 = R^7$ = Phenyl, $R^8$ = H, X = $CHR^{10}$, $R^{10}$ = Trimethylsilyl) in 250 ml Toluol (multi pulse injection)
Lösungsmittel : 4 Liter Cyclohexan
Polymerisationsdruck : 10 bar Ethen
Polymerisationstemperatur : 105 °C
Gesamtausbeute : 712 g (13 % Oligomere)
PE-Schmelzpunkt : ca. 116 °C
Grenzviskosität des PE in Tetralin bei 120 °C 0.08 dl/g
Katalysator-Aktivität : 12 714 mol umgesetztes Ethen pro mol Nickel.

i) Katalysator : 2 mmol III ($R^1 = R^2 = R^3$ = Isopropyl, $R^4 = R^5 = R^6 = R^7 = R^{10}$ = Phenyl, $R^8$ = H, X = $CHR^{10}$) in 250 ml Toluol (multi pulse injection)
Lösungsmittel : 1 Liter Cyclohexan
Polymerisationsdruck : 100 bar Ethen
Polymerisationstemperatur : 90 °C
Gesamtausbeute : 1 388 g (0 % Oligomere)
PE-Schmelzpunkt : ca. 118 °C
Grenzviskosität des PE in Tetralin bei 120 °C 0.10 dl/g
Katalysator-Aktivität : 24 785 mol umgesetztes Ethen pro mol Nickel.

j) Katalysator aus 1 mmol Bis-cyclooctadien-Nickel, 1 mmol I ($R^4 = R^5 = R^6 = R^7$ = Phenyl, $R^8$ = $SO_3NA$), 1 mmol II ($R^1 = R^2 = R^3$ = Phenyl, X = CH—$R^{10}$, $R^{10}$ = —CH=CH-phenyl) in 50 ml Toluol (single pulse injection)
Lösungsmittel : 1 Liter Cyclohexan
Polymerisationsdruck : 100-200 bar Ethen

Polymerisationstemperatur : 110 °C
Gesamtausbeute : 333 g (0 % Oligomere)
PE-Schmelzpunkt : 129 °C
Grenzviskosität des PE in Tetralin Bei 140 °C 1.55 dl/g
Katalysator-Aktivität : 11 893 mol umgesetztes Ethen pro mol Nickel.

## Patentansprüche

1. Nickel-Verbindungen, herstellbar durch Umsetzung einer Nickel-(O)-Verbindung oder einer Verbindung, die in situ in eine Nickel-(O)-Verbindung überführt werden kann, mit Verbindungen der Formeln (I) und (II)

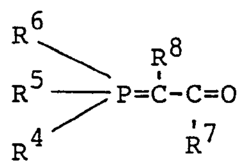

und

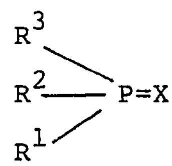

(I) (II)

worin

$R^1$, $R^2$ und $R^3$ unabhängig voneinander gegebenenfalls durch Halogen, Hydroxy, $C_1$-$C_{20}$-Alkoxy, oder $C_6$-$C_{12}$-Aryloxy substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino, Phenoxy oder $C_1$-$C_4$-Alkoxy

X O, $NR^9$ oder

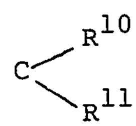

$R^4$, $R^5$, $R^6$, $R^7$ und $R^8$ unabhängig voneinander, gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem

$R^7$ Wasserstoff,

$R^8$ Wasserstoff oder Sulfonat und

$R^9$, $R^{10}$ und $R^{11}$ unabhängig voneinander Wasserstoff, Nitrophenyl, Trimethylsilyl, Halogen, Cyano oder $R^1$ bedeuten.

2. Nickelverbindungen nach Anspruch 1, wobei

$R^1$, $R^2$ und $R^3$ $C_1$-$C_6$-Alkyl, Cyclohexyl, Phenyl, Tolyl, Benzyl, Di-$C_1$-$C_4$-alkylamino, Phenoxy und $C_1$-$C_4$-Alkoxy,

$R^4$ $C_6$-$C_{12}$-Aryl,

$R^5$, $R^6$, $R^7$ und $R^8$ Cyclohexyl, Phenyl, Tolyl, Benzyl, Vinyl und $C_1$-$C_4$-Alkyl,

$R^7$ darüber hinaus Wasserstoff oder $C_1$-$C_4$-Alkoxy

$R^8$ darüber hinaus Wasserstoff oder Sulfonat und

$R^9$, $R^{10}$ und $R^{11}$ Wasserstoff, $C_1$-$C_6$-Alkyl, Phenyl, Chlorphenyl, Nitrophenyl, $C_1$-$C_6$-Alkylphenyl, Trimethylsilyl, Chlor, Cyano, $C_2$-$C_6$-Alkenyl und Phenyl-$C_2$-$C_6$-alkenyl bedeuten.

3. Nickelverbindungen der Formel

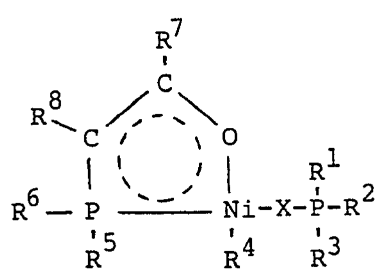

worin $R_1$ bis $R_8$ und X die in Anspruch 1 genannte Bedeutung besitzen.

4. Verfahren zur Herstellung von Nickel-Verbindungen gemäß Ansprüchen 1 bis 3, dadurch

gekennzeichnet, daß man eine Nickel-(O)-Verbindung oder eine Verbindung, die in situ in eine Nickel-(O)-Verbindung überführt werden kann, mit Verbindungen der Formeln (I) und (II)

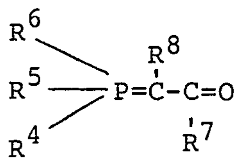 und 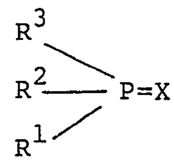

worin $R^1$, $R^2$, $R^3$, $R^4$, $R^5$, $R^6$, $R^7$, $R^8$ und X die in Anspruch 1 angegebene Bedeutung haben, unter Ausschluß von Sauerstoff, umsetzt.

5. Verfahren nach Anspruch 3, dadurch gekennzeichnet, daß man pro Mol Nickel-(O)-Verbindung 1 bis 4 Mole der Verbindung der Formel (I) und 1 bis 4 Mole der Verbindung der Formel (II) einsetzt.

6. Verfahren nach Anspruch 3, dadurch gekennzeichnet, daß man die Umsetzung bei 0 bis 100 °C in einem inerten Lösungsmittel durchführt.

7. Verwendung der Nickelverbindungen gemäß Ansprüchen 1 und 2 als Katalysatoren bei der Polymerisation von Olefinen.

8. Verwendung der Nickelverbindungen gemäß Ansprüchen 1 und 2 als Katalysatoren bei der Polymerisation von Ethen.

**Claims**

1. Nickel compounds obtainable by reaction of a nickel-(O) compound or a compound which may be converted in situ into a nickel-(O) compound, with compounds corresponding to formulae (I) and (II) below

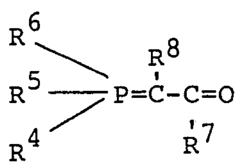 and 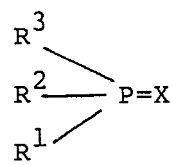

(I) (II)

in which

$R^1$, $R^2$ and $R^3$, independently of one another, represent $C_1$-$C_{20}$-alkyl, $C_6$-$C_{12}$-aryl or $C_3$-$C_8$-cycloalkyl optionally substituted by halogen, hydroxy, $C_1$-$C_{20}$-alkoxy or $C_6$-$C_{12}$-aryloxy, also $C_6$-$C_{12}$-aryl-$C_1$-$C_{20}$-alkyl, $C_1$-$C_{20}$-alkyl-$C_6$-$C_{12}$-aryl, $C_1$-$C_{20}$-alkyl-$C_3$-$C_8$-cycloalkyl, $C_6$-$C_{12}$-aryl-$C_3$-$C_8$-cycloalkyl, $C_2$-$C_6$-alkenyl, $C_6$-$C_{12}$-aryl-$C_2$-$C_6$-alkenyl, di-$C_1$-$C_4$-alkylamino, phenoxy or $C_1$-$C_4$-alkoxy,

X represents O, $NR^9$ or

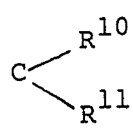

$R^4$, $R^5$, $R^6$, $R^7$ and $R^8$, independently of one another, represent $C_1$-$C_{20}$-alkyl, $C_6$-$C_{12}$-aryl, $C_2$-$C_{30}$-alkenyl or $C_3$-$C_8$-cycloalkyl optionally substituted by halogen, hydroxy, $C_1$-$C_{20}$ alkoxy or $C_6$-$C_{12}$ aryloxy, also $C_6$-$C_{12}$-aryl-$C_1$-$C_{20}$-alkyl, $C_1$-$C_{20}$-alkyl-$C_6$-$C_{12}$-aryl, halogen, hydroxy, $C_1$-$C_{20}$-alkoxy or $C_6$-$C_{12}$-aryloxy,

$R^7$ represents hydrogen,

$R^8$ represents hydrogen or sulfonate and

$R^9$, $R^{10}$ and $R^{11}$, independently of one another, represent hydrogen, nitrophenyl, trimethylsilyl, halogen, cyano or have the same meaning as $R^1$.

2. Nickel compounds as claimed in Claim 1 in which

$R^1$, $R^2$ and $R^3$ represent $C_1$-$C_6$-alkyl, cyclohexyl, phenyl, tolyl, benzyl, di-$C_1$-$C_4$-alkylamino, phenoxy and $C_1$-$C_4$-alkoxy,

$R^4$ represents $C_6$-$C_{12}$-aryl,

$R^5$, $R^6$, $R^7$ and $R^8$ represent cyclohexyl, phenyl, tolyl, benzyl, vinyl and $C_1$-$C_4$-alkyl,

$R^7$ additionally represents hydrogen or $C_1$-$C_4$-alkoxy,

$R^8$ additionally represents hydrogen or sulfonate and

$R^9$, $R^{10}$ and $R^{11}$ represent hydrogen, $C_1$-$C_6$-alkyl, phenyl, chlorophenyl, nitrophenyl, $C_1$-$C_6$-alkylphenyl, trimethylsilyl, chlorine, cyano, $C_2$-$C_6$-alkenyl and phenyl-$C_2$-$C_6$-alkenyl.

3. Nickel compounds corresponding to the following formula

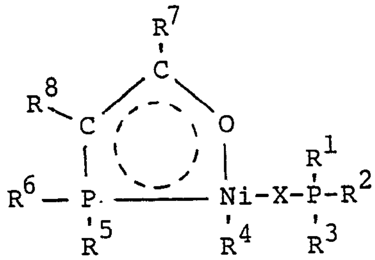

in which $R^1$ to $R^8$ and X are as defined in Claim 1.

4. A process for producing the nickel compounds claimed in Claims 1 to 3, characterized in that a nickel-(O) compound or a compound which can be converted in situ into a nickel-(O) compound are reacted in the absence of oxygen with compounds corresponding to formulae (I) and (II) below

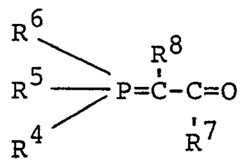

and

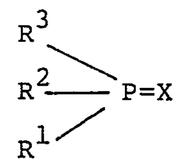

in which $R^1$, $R^2$, $R^3$, $R^4$, $R^5$, $R^6$, $R^7$, $R^8$ and X are as defined in Claim 1.

5. A process as claimed in Claim 3, characterized in that from 1 to 4 moles of the compound corresponding to formula (I) and from 1 to 4 moles of the compound corresponding to formula (II) are used per mole of nickel-(O) compound.

6. A process as claimed in Claim 3, characterized in that the reaction is carried out at 0 to 100 °C in an inert solvent.

7. The use of the nickel compounds claimed in Claims 1 and 2 as catalysts in the polymerization of olefins.

8. The use of the nickel compounds claimed in Claims 1 and 2 as catalysts in the polymerization of ethene.

**Revendications**

1. Composés de nickel, pouvant être préparés par réaction d'un composé du type nickel-(O) ou d'un composé qui peut être transformé in situ en un composé du type nickel-(O), avec des composés de formules (I) et (II)

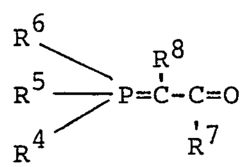

et

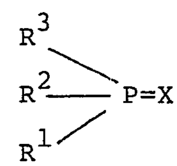

où

$R^1$, $R^2$ et $R^3$ représentent, indépendamment les uns des autres, un groupe alkyle en $C_1$ à $C_{20}$, aryle en $C_6$ à $C_{12}$ ou cycloalkyle en $C_3$ à $C_8$ éventuellement substitué par un halogène, un radical hydroxy, alkoxy en $C_1$ à $C_{20}$ ou aryloxy en $C_6$ à $C_{12}$, en outre un groupe (aryle en $C_6$ à $C_{12}$)-(alkyle en $C_1$ à $C_{20}$), (alkyle en $C_1$ à $C_{20}$)-(aryle en $C_6$ à $C_{12}$), (alkyle en $C_1$ à $C_{20}$)-(cycloalkyle en $C_3$ à $C_8$), (aryle en $C_6$ à $C_{12}$)-(cycloalkyle en $C_3$ à $C_8$), alcényle en $C_2$ à $C_6$, (aryle en $C_6$ à $C_{12}$)-(alcényle en $C_2$ à $C_6$), di-(alkyle en $C_1$ à $C_4$) amino, phénoxy ou alkoxy en $C_1$ à $C_4$

X représente O, $NR^9$ ou

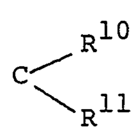

$R^4$, $R^5$, $R^6$, $R^7$ et $R^8$ représentent, indépendamment les uns des autres, un groupe alkyle en $C_1$ à $C_{20}$, aryle en $C_6$ à $C_{12}$, alcényle en $C_2$ à $C_{30}$ ou cycloalkyle en $C_3$ à $C_8$ éventuellement substitué par un

halogène ou un radical hydroxy, alkoxy en $C_1$ à $C_{20}$ ou aryloxy en $C_6$ à $C_{12}$, en outre un groupe (aryle en $C_6$ à $C_{12}$)-(alkyle en $C_1$ à $C_{20}$), (alkyle en $C_1$ à $C_{20}$)-(aryle en $C_6$ à $C_{12}$), un halogène, un groupe hydroxy, alkoxy en $C_1$ à $C_{20}$ ou aryloxy en $C_6$ à $C_{12}$, en outre

$R^7$ représente l'hydrogène,

$R^8$ est l'hydrogène ou un groupe sulfonate et

$R^9$, $R^{10}$ et $R^{11}$ représentent, indépendamment les uns des autres, l'hydrogène ou un radical nitrophényle, triméthylsilyle, halogéno, cyano ou $R^1$.

2. Composés de nickel suivant la revendication 1, dans lesquels

$R^1$, $R^2$ et $R^3$ représentent un groupe alkyle en $C_1$ à $C_6$, cyclohexyle, phényle, tolyle, benzyle, di-(alkyle en $C_1$ à $C_4$) amino, phénoxy et alkoxy en $C_1$ à $C_4$.

$R^4$ est un groupe aryle en $C_6$ à $C_{12}$,

$R^5$, $R^6$, $R^7$ et $R^8$ représentent un groupe cyclohexyle, phényle, tolyle, benzyle, vinyle et alkyle en $C_1$ à $C_4$.

$R^7$ représente en outre l'hydrogène ou un groupe alkoxy en $C_1$ à $C_4$,

$R^8$ représente en outre l'hydrogène ou un groupe sulfonate et

$R^9$, $R^{10}$ et $R^{11}$ représentent l'hydrogène ou un radical alkyle en $C_1$ à $C_6$, phényle, chlorophényle, nitrophényle, (alkyle en $C_1$ à $C_6$) phényle, triméthylsilyle, chloro, cyano, alcényle en $C_2$ à $C_6$ et phényl-(alcényle en $C_2$ à $C_6$).

3. Composés de nickel de formule

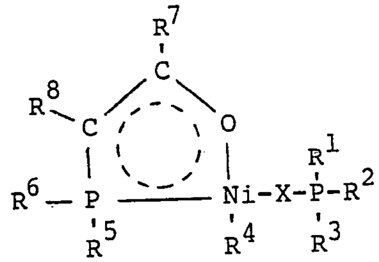

dans laquelle $R_1$ à $R_8$ et X ont la définition mentionnée dans la revendication 1.

4. Procédé de préparation de composés de nickel suivant les revendications 1 à 3, caractérisé en ce qu'on fait réagir un composé du type nickel-(O) ou un composé qui peut être transformé in situ en un composé du type nickel-(O), avec des composés de formules (I) et (II)

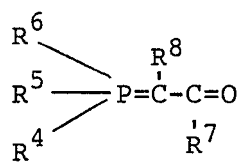

et

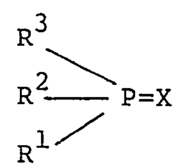

dans lesquelles $R^1$, $R^2$, $R^3$, $R^4$, $R^5$, $R^6$, $R^7$, $R^8$ et X ont la définition indiquée dans la revendication 1, à l'abri de l'oxygène.

5. Procédé suivant la revendication 3, caractérisé en ce qu'on utilise par mole de composé du type nickel-(O) 1 à 4 moles du composé de formule (I) et 1 à 4 moles du composé de formule (II).

6. Procédé suivant la revendication 3, caractérisé en ce qu'on conduit la réaction à 0-100 °C dans un solvant inerte.

7. Utilisation des composés de nickel suivant les revendications 1 et 2, comme catalyseurs dans la polymérisation d'oléfines.

8. Utilisation de composés de nickel suivant les revendications 1 et 2, comme catalyseurs dans la polymérisation d'éthène.